# EUROPÄISCHE PATENTSCHRIFT

(11) **EP 1 468 874 B1**
(45) Veröffentlichungstag und Bekanntmachung des Hinweises auf die Patenterteilung: **07.06.2006**
(21) Anmeldenummer: 04008034.3
(22) Anmeldetag: 02.04.2004
(51) Int. Cl.: B60R 5/04, B60R 13/01, B60R 7/02, B60P 1/64

(54) **Kraftfahrzeug mit einer auf einem Schienenweg verschiebbaren Ladeplatte**
Vehicle with a load pallet movable on rails
Vehicule avec plaque de chargement coulissante sur des rails

(30) Priorität: 16.04.2003 DE 10317537
(43) Veröffentlichungstag der Anmeldung: 20.10.2004
(60) Teilanmeldung: 06006653.7
(73) Patentinhaber: ADAM OPEL AG, 65423 Rüsselsheim (DE)
(72) Erfinder: Larsen, Danny-Brian, 65428 Rüsselsheim (DE); Rudolph, Kai, 65199 Wiesbaden (DE)

(56) Entgegenhaltungen:
- EP-A- 0 893 307
- DE-A- 19 619 126
- DE-U- 20 120 819
- US-A- 5 979 962
- US-A1- 2002 076 312

## Beschreibung

Die Erfindung betrifft ein Kraftfahrzeug mit einem Laderaum mit einem in Längsrichtung des Kraftfahrzeugs verlaufenden Schienenweg, auf dem eine Ladeplatte verschiebbar ist, wobei sich der Schienenweg in einen Fahrgastraum des Kraftfahrzeugs erstreckt und die Ladeplatte auf dem Schienenweg zwischen Laderaum und Fahrgastraum verschiebbar ist, gemäß dem Oberbegriff des Anspruchs 1.

Ein Kraftfahrzeug mit einem Laderaum mit einem in Längsrichtung des Kraftfahrzeugs verlaufenden Schienenweg, auf dem eine Ladeplatte verschiebbar ist, ist beispielsweise aus der DE 198 58 308 A1 bekannt. Darin wird eine Ladeplatte für einen Laderaum eines Fahrzeugs beschrieben, wobei die Ladeplatte an fahrzeugfesten seitlichen Längsführungen gelagert und zumindest zum Teil etwa parallel zum Fahrzeugboden aus dem Laderaum ausfahrbar ist, um so im Bedarfsfalle die mit Fracht beladbare Stellfläche des Laderaumes vergrößern zu können. Das gezeigte Fahrzeug hat dabei den Nachteil, dass bei ausgezogener Ladeplatte ein zum Fahrzeuginneren gelegener Teil des Laderaums nur schlecht erreichbar ist und schwere Fracht dort nur mit Mühe platziert werden kann. Wenn aber schwere Fracht auf der gut erreichbaren ausgezogenen Ladeplatte platziert wird, beeinträchtigt sie die Stabilität des Fahrzeugs und ist nur schwer gegen Herunterfallen während der Fahrt zu sichern. Außerdem muss schon zu Beginn des Ladens entschieden werden, ob die Ladeplatte herausgezogen werden soll, denn wenn erst die Ladeplatte beladen und dann herausgezogen wird, weil sich das Bedürfnis nach mehr Laderaum herausstellt, ist der durch das Herausziehen frei werdende Laderaum wegen davor stehender Fracht nur sehr schwer zugänglich, und die Lastverteilung ist sehr ungünstig, wenn die herausgezogene Ladeplatte voll ist und dahinter liegender Laderaum nicht.

Ein Kraftfahrzeug der eingangs genannten Art ist aus der DE 196 19 126 A1 bekannt. Bei diesem Fahrzeug kann die Rückenlehne der hinteren Fahrzeugsitze um eine untere Fahrzeugquerachse nach vorne in eine horizontale Beladelage geschwenkt werden, in der die Oberseite der Rückenlehne etwa horizontal und bündig mit dem Boden des Laderaums verläuft. An der in die Beladelage geschwenkten Oberseite der Rückenlehne sind seitlich gegenüberliegend zwei Führungsprofile befestigt, die in dieser Beladelage in Fahrzeuglängsrichtung verlaufen. Die Ladeplatte kann somit aus dem Laderaum über die nach vorne geschwenkte Rückenlehne geschoben werden.

Es ist Aufgabe der vorliegenden Erfindung, ein Kraftfahrzeug mit einem Laderaum zu schaffen, dessen Fassungsvolumen bei Bedarf vergrößert werden kann, von dem alle Bereiche gut erreichbar sind und ohne Sicherheitsproblem mit schwerer Fracht beladen werden können. Überdies soll die Funktionalität des Fahrzeugs im Bereich des Laderaums optimiert werden.

Die Aufgabe wird durch ein Kraftfahrzeug mit den Merkmalen des Anspruchs 1 gelöst.

Indem beim erfindungsgemäßen Kraftfahrzeug die Ladeplatte auf dem Schienenweg aus dem Laderaum in den Fahrgastraum verschoben wird, werden auf der Ladeplatte abgestellte sperrige Transportgüter vom Laderaum in den Fahrgastraum mitverschoben, so dass im Laderaum vermehrter Platz zur Aufnahme weiterer Transportgüter frei gemacht wird. Das Beladen ist einfach, da die Ladeplatte beladen werden kann, wenn sie sich nahe an der Ladekante einer Heckklappe des Fahrzeugs befindet, und erst im beladenen Zustand bei Bedarf verschoben wird. Dies macht es auch einfach, eine für ein stabiles Fahrverhalten günstige Lastverteilung der Fracht zu realisieren, bei der hohe Lasten nahe am Heck des Fahrzeugs vermieden werden.

Die vom Schienenweg abnehmbare Ladeplatte ist als Hutablage in das Kraftfahrzeug wieder einsetzbar. Dabei ist die Ladeplatte selbst nach ihrer Abnahme von den Schienen ein integrierter Bestandteil des Innenraums und hat dort eine nützliche und praktische Funktion, ohne dass man die Ladeplatte als redundantes Bauteil aus dem Kraftfahrzeug entfernen müsste.

Dabei ist die Ladeplatte vorteilhaft auf eine entlang des Schienenwegs verschiebbaren Basis lösbar befestigt. Nach Lösen der Ladeplatte kann die Basis dann als Basis für andere Funktionsmodelle dienen, bei denen es sich beispielsweise um eine Armlehne, einen Getränkehalter oder einen Kindersitz handeln kann, die dann entlang des Schienenwegs verschiebbar sind.

Besonders bevorzugt sind im Fahrgastraum angeordnete Sitze klappbar und von der Ladeplatte überfahrbar. So kann der Fahrgastraum sowohl zum Personentransport als auch je nach Bedarf für den Transport von Gütern eingesetzt werden.

Dabei ist eine Ausgestaltung möglich, bei der an wenigstens einem der Sitze Schienenelemente angeordnet sind, die in einem umgeklappten Zustand des Sitzes Bestandteil des Schienenweges sind. Eine solche Ausführungsform teilt im aufgerichteten Zustand des Sitzes den Schienenweg in einen im Fahrgastraum angeordneten Schienenweg und einen im Laderaum angeordneten Schienenweg, die beide für sich jeweils mit verschiebbaren Schlitten versehen sein können. Im Fahrgastraum ergibt sich dadurch ein zusätzlicher Sitzplatz für eine zu befördernde Person. Bei Bedarf wird der Sitz umgeklappt und die an ihm angeordneten Schienenelemente ergänzen den im Fahrgastraum angeordneten Schienenweg und den im Laderaum angeordneten Schienenweg zu einem sich durch den ganzen Innenraum des Kraftfahrzeuges erstreckenden Schienenweg.

Bevorzugterweise ist in einem Boden des Laderaums wenigstens eine Vertiefung neben dem Schienenweg angeordnet. Eine solche Vertiefung kann als weiterer Stauraum verwendet werden.

Besonders bevorzugt ist dabei ein in die Vertiefung eingesetzter Behälter. Ein solcher Behälter kann mit variabel setzbaren Trennwänden zur Aufnahme von Kleingegenständen versehen sein.

Ganz besonders bevorzugt ist dabei eine Ausführungsform, bei welcher der Behälter mit nach unten gekehrtem Boden und nach oben gekehrtem Boden in die Vertiefung einsetzbar ist. So kann der Behälter mit nach oben gekehrtem Boden in die Vertiefung eingesetzt mit dem Schienenweg bündig einen ebenen Laderaumboden bilden. Auf diesem lassen sich dann größere Transportgegenstände in dem Laderaum abstellen, nachdem die Ladeplatte in den Fahrgastraum verschoben worden ist.

Der Schienenweg kann durch ein Schienenpaar mit zwei parallelen und voneinander beabstandeten Schienen gegeben sein.

Vorteilhaft ist dabei eine Vertiefung zwischen den Schienen vorgesehen. Diese Vertiefung kann als zusätzlicher Stauraum verwendet werden.

Zwischen den Schienen kann eine Abdeckung vorgesehen sein. Mit ihr lässt sich der zwischen den Schienen vorgesehene Stauraum bedarfsweise abdecken.

Beispielsweise kann die Abdeckung ein Klappdeckel sein.

Die Abdeckung kann aber auch ein Rollo sein.

Das Kraftfahrzeug kann wenigstens einen entlang des Schienenweges versetzbaren Behälter umfassen. Ein solcher Behälter lässt sich zur Aufnahme der verschiedensten Gegenstände oder auch von Lebensmitteln verwenden.

Dabei kann ein Boden des Behälters in der Vertiefung unterhalb der Schienen liegen.

Bei einer weiteren Ausführungsform kann der Boden des Behälters auf Höhe der Schienen liegen. Ein solcher Behälter kann mit einer weiteren Funktion versehen sein und z. B. als aufklappbare Armlehne ausgebildet sein.

Im Folgenden wird die Erfindung anhand verschiedener Ausführungsbeispiele unter Zuhilfenahme von Zeichnungen näher erläutert. Dabei zeigen:
- Fig. 1:: den Innenraum eines erfindungsgemäßen Kraftfahrzeuges mit einer Ladeplatte;
- Fig. 2:: den Innenraum des erfindungsgemäßen Kraftfahrzeuges, bei dem die Ladeplatte durch ein anderes Funktionsmodul ersetzt ist;
- Fig. 3:: einen Querschnitt durch den Innenraum des erfindungsgemäßen Kraftfahrzeuges; und
- Fig. 4:: einen Querschnitt durch einen Innenraum eines weiteren erfindungsgemäßen Kraftfahrzeuges.

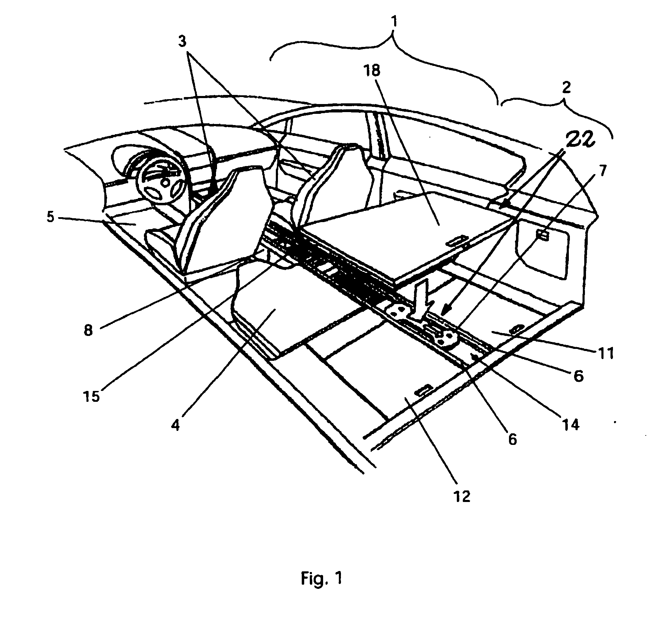

In Fig. 1 ist ein Innenraum eines erfindungsgemäßen Kraftfahrzeuges dargestellt. Der Innenraum besteht aus einem frontseitigen Fahrgastraum 1 und einem heckseitigen Laderaum 2. Im Fahrgastraum 1 sind ein linker und ein rechter Vordersitz 3 und ein linker und ein rechter Rücksitz 4 angeordnet. Zwischen dem linken und dem rechten Vordersitz 3 und dem linken und dem rechten Rücksitz 4 verlaufen zwei parallele Schienen 6, die gegenüber einem Boden 5 des Fahrgastraumes erhöht sind. Die Schienen 6 bilden einen Schienenweg, der sich über eine ganze Länge des Innenraumes erstreckt.

Entlang der Schienen 6 sind verschiebbare Schlitten 8 und 22 vorgesehen. Bei den Schlitten 8 handelt es sich um an den Schienen 6 hängend angeordnete Behälter. Dagegen ist der Schlitten 22 zweiteilig ausgebildet und umfasst eine Basis 7 und ein daran befestigtes Funktionsmodul.

An der Basis 7 des gezeigten Schlittens 22 ist als Funktionsmodul eine Ladeplatte 18 befestigt, die der besseren Übersichtlichkeit halber in der Fig. 1 von der Basis 7 beabstandet gezeichnet ist, wobei jedoch ein Pfeil deren Befestigung an der Basis 7 anzeigt.

Der Schlitten 22 mit der Basis 7 und der an ihr befestigen Ladeplatte 18 lässt sich entlang des von den Schienen 6 gebildeten Schienenweges nach Belieben vom Fahrgastraum 1 in den Laderaum 2 oder umgekehrt verschieben. Dabei kann der aus der Basis 7 und der Ladeplatte 18 gebildete Schlitten 22 die hängende Behälter umfassenden Schlitten 8 ohne gegenseitige Behinderung entlang des Schienenweges überfahren.

Um die Ladeplatte 18 in den Fahrgastraum 1 verschieben zu können, sind die Rücksitze 4 klappbar ausgestaltet und in Fig. 1 in umgeklappter Stellung gezeichnet. Wie in Fig. 1 ferner zu sehen ist, können die Rücksitze 4 in der umgeklappten Stellung von der Ladeplatte 18 überfahren werden.

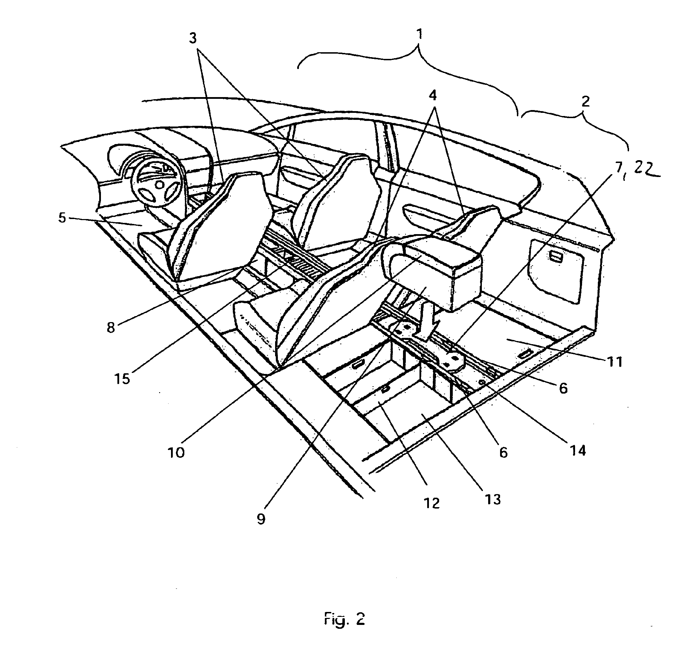

Im Laderaum 2 ist links und rechts des Schienenweges jeweils eine Vertiefung in einem Boden des Laderaumes 2 vorgesehen. In diese Vertiefungen sind Behälter 11 und 12 eingesetzt. Die Behälter 11 und 12 sind aus den Vertiefungen entnehmbar. Sie können sowohl mit nach unten gekehrtem Boden als auch mit nach oben gekehrtem Boden in die Vertiefung eingesetzt werden. Sofern sie mit nach oben gekehrtem Boden in die Vertiefung eingesetzt sind, wie in Fig. 1 gezeigt bzw. wie der Behälter 11 in Fig. 2, bilden sie zusammen mit angrenzenden Flächen des Laderaumbodens eine ebene Abstellfläche. Sind sie jedoch wie die Behälter 12 in Fig. 2 mit dem Boden nach unten in die Vertiefung eingesetzt, können sie kleinteiliges Ladegut aufnehmen.

Zwischen den Schienen 6 ist im Laderaum 2 ein weiterer nutzbarer Stauraum vorgesehen. Zu dessen Abdeckung dient eine Klappe 14. Nach Aufklappen der Klappe 14 wird der zwischen den Schienen 6 befindliche Stauraum zugänglich. Sofern die Klappe 14 verschlossen, oder bei abnehmbar ausgebildeter Klappe 14, entfernt ist, kann dieser Stauraum vom aus der Basis 7 und der Ladeplatte 18 bestehenden Schlitten überfahren werden. Entsprechend ist im Fahrgastraum 1 zwischen den Schienen 6 zur Abdeckung des zwischen den Schienen 6 befindlichen Raumes, das heißt zur Abdeckung der zwischen den Schienen 6 hängend angeordneten Behälter der Schlitten 8, ein Rollo 15 vorgesehen.

Sofern sich der aus Basis 7 und Ladeplatte 18 bestehende Schlitten 22 im Laderaum 2 befindet, können auf der Ladeplatte 18 sperrige Transportgüter wie zum Beispiel Getränkekästen abgestellt werden. Bei umgeklappten Rücksitzen 4 kann diese Ladeplatte 18 dann mitsamt den Transportgütern in den Fahrgastraum 1 verschoben werden und macht den Laderaum 2 frei für die Aufnahme weiterer Transportgegenstände. Außerdem werden nach Verschieben der Ladeplatte 18 in den Fahrgastraum 1 sowohl die neben den Schienen 6 angeordneten Behälter 11 und 12 als auch der zwischen den Schienen 6 befindliche, von der Klappe 14 abgedeckte Stauraum zugänglich.

Falls mit dem Kraftfahrzeug keine sperrigen Transportguter transportiert werden, lässt sich die Ladeplatte 18 von der Basis 7 lösen. Die Ausführung des erfindungsgemäßen Kraftfahrzeuges ist dabei derart, dass die Ladeplatte 18 nach Trennung von der Basis 7 als Hutablage in den Laderaum 2 eingesetzt werden kann. Sie erfüllt somit auch nach ihrer Trennung von der Basis 7, wenn sie nicht für den Transport sperriger Güter gebraucht wird, eine praktische Funktion, bei der sie voll in die Innenausstattung des Kraftfahrzeuges integriert ist und nicht wie ein redundantes Element entfernt zu werden braucht.

Bedarfsweise lässt sich statt der Ladeplatte 18 ein anderes Funktionsmodul an der Basis 7 befestigen. Fig. 2 zeigt den gleichen Innenraum wie Fig. 1, mit dem einen Unterschied, dass die auf den Schienen 6 verschiebbare Basis 7 des Schlittens 22 ein anderes Funktionsmodul trägt. Bei dem Funktionsmodul handelt es sich um eine Armlehne 9. Wie die Ladeplatte 18 aus Fig. 1 ist die Armlehne 9 von der Basis 7 beabstandet gezeichnet, um den Sachverhalt besser zu verdeutlichen. Aus denselben Gründe ist in Fig. 2 die als Hutablage eingesetzte Ladeplatte 18 nicht eingezeichnet

Die Armlehne 9 ist hohl ausgebildet und verfügt über einen klappbaren Deckel 10. Nach Aufklappen des Deckels 10 wird das Innere der Armlehne 9 zugänglich, so dass in ihm Gegenstände verstaut werden können und das Innere der Armlehne 9 als Stauraum zur Verfügung steht.

Die Armlehne 9 ist nach ihrer Befestigung auf der Basis 7 entlang des Schienenwegs aus dem Laderaum 2 in den Fahrgastraum 1 verschiebbar.

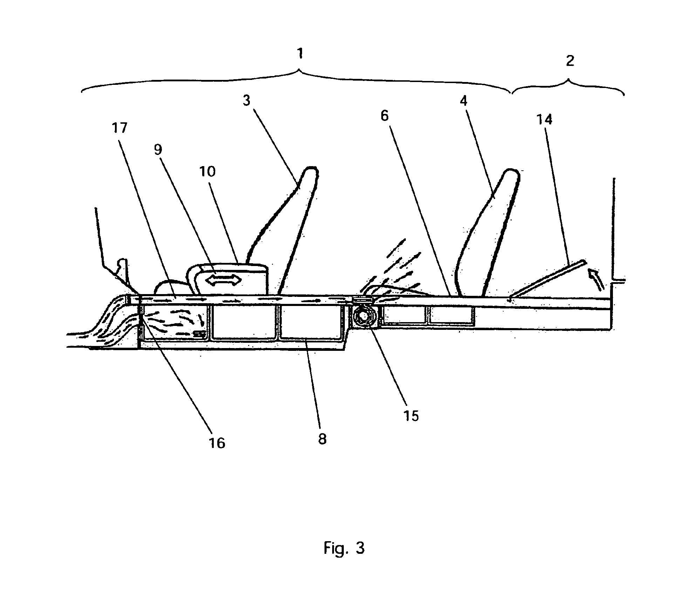

Ein Querschnitt durch den in der Fig. 2 dargestellten Innenraum des erfindungsgemäßen Fahrzeuges ist in Fig. 3 gezeigt. Zu sehen sind ein rechter Vordersitz 3 und ein rechter Rücksitz 4, die sich in der dargestellten Blickrichtung der Fig. 3 hinter den Schienen 6 befinden. Die hinter dem Rücksitz 4 im Laderaum 2 befindliche Klappe 14 zur Abdeckung des Stauraumes zwischen den Schienen 6 ist in der Darstellung der Fig. 3 aufgeklappt dargestellt. Der auf den Schienen 6 bewegliche Schlitten 22, bestehend aus der in der Darstellung nicht sichtbaren Basis 7 und einer daran befestigten Armlehne 9, befindet sich in der Darstellung auf Höhe des Vordersitzes 3, er kann jedoch über den gesamten Schienenweg verschoben werden, wie durch einen Doppelpfeil angedeutet ist. Auf Höhe des Rücksitzes 4 ist ein Aufnahmekasten für das Rollo 15 vorgesehen. Außerdem sind die Schlitten 8 mit an den Schienen 6 hängend angeordneten Behältern dargestellt. Ein vorderster der Behälter 8 verfügt dabei frontseitig über einen Anschluss 16, mit dem er mit einer Klimaanlage des Kraftfahrzeuges verbunden ist. Entlang der Schienen 6 sind Rohre 17 geführt, die ebenfalls mit der Klimaanlage verbunden sind.

Über die Rohre 17 lässt sich eine von der Klimaanlage erzeugte Luftströmung besser im Fahrgastraum 1 verteilen. Sie erreicht bei dieser Ausführung insbesondere die Mitte das Fahrgastraumes 1. Über den Anschluss 16 gelangt der von der Klimaanlage erzeugte Luftstrom darüber hinaus in den Behälter des vordersten Schlittens 8. Da der von einer Klimaanlage im Kühlbetrieb abgegebene Luftstrom in der Regel um einige Grad kälter ist als die im Fahrgastraum 1 einzuregelnde Temperatur, eignet sich der Behälter des vordersten Schlittens 8 gut als Kühlbehälter für Lebensmittel.

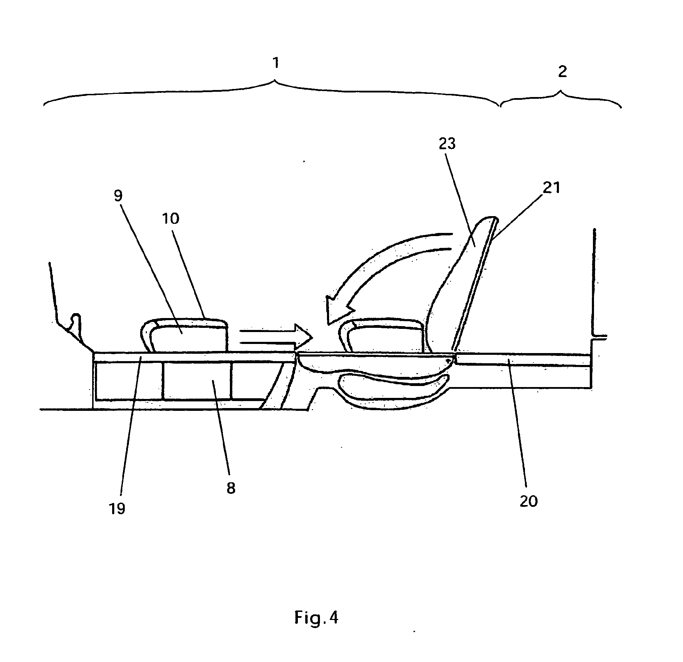

Schließlich ist in Fig. 4 ein Querschnitt durch eine alternative Ausführungsform eines erfindungsgemäßen Kraftfahrzeuges dargestellt. Bei dieser Ausführungsform ist im Fahrgastraum 1 ein vorderes Schienenstück 19 vorgesehen. Entsprechend ist im Laderaum 2 ein hinteres Schienenstück 20 vorgesehen. Beide Schienenstücke 19 und 20 sind in Längsrichtung des Kraftfahrzeuges parallel und auf gleicher Höhe ausgerichtet. Die Schienenstücke 19 und 20 werden jedoch von einem Rücksitz 23 getrennt, der zwischen diesen angeordnet ist. An einer Rückseite des Rücksitzes 23 sind Schienenelemente 21 angebracht. Der Rücksitz 23 ist klappbar. Er kann wie in Fig. 4 gezeigt umgeklappt werden. Im umgeklappten Zustand des Rücksitzes 23 sind die an ihm angebrachten Schienenelemente 21 mit dem vorderen Schienenstück 19 und dem hinteren Schienenstück 20 bündig. Somit bilden bei umgeklapptem Rücksitz 23 das vordere Schienenstück 19, die Schienenelemente 21 und das hintere Schienenstück 20 einen den Innenraum des Kraftfahrzeuges durchziehenden Schienenweg, der sich ohne Unterbrechung vom Fahrgastraum 1 in den Laderaum 2 erstreckt. Auf diesem Schienenweg sind die zuvor beschriebenen Schlitten 22 mit Basis 7 und daran befestigtem Funktionsmodul, wie zum Beispiel einer Armlehne 9, einer Ladeplatte 18, aber auch einem Getränkehalter, einem Abstelltisch, einem Kindersitz usw., entlang dieses Schienenweges versetzbar.

### Bezugszeichenliste

1. Fahrgastraum
2. Laderaum
3. Vordersitz
4. Rücksitz
5. Fahrgastraumboden
6. Schienen
7. Basis
8. Schlitten
9. Armlehne
10.Deckel
11.Behälter
12.Behälter
13. Boden
14. Klappe
15.Rollo
16. Anschluss
17.Rohr
18.Ladeplatte
19. vorderes Schienenstück
20.hinteres Schienenstück
21. Schienenelement
22.Schlitten
23.Sitz

## Patentansprüche

1. Kraftfahrzeug mit einem Laderaum (2) mit einem in Längsrichtung des Kraftfahrzeugs verlaufenden Schienenweg, auf dem eine Ladeplatte (18) verschiebbar ist, wobei sich der Schienenweg in einen Fahrgastraum (1) des Kraftfahrzeugs erstreckt und die Ladeplatte (18) auf dem Schienenweg zwischen Laderaum (2) und Fahrgastraum (1) verschiebbar und vom Schienenweg abnehmbar ist, **dadurch gekennzeichnet, dass** die Ladeplatte (18) als Hutablage in das Kraftfahrzeug einsetzbar ist.

2. Kraftfahrzeug nach einem der vorhergehenden Ansprüche, **dadurch gekennzeichnet, dass** die Ladeplatte (18) auf einer entlang des Schienenwegs verschiebbaren Basis (7) lösbar befestigt ist.

3. Kraftfahrzeug nach einem der vorhergehenden Ansprüche, **dadurch gekennzeichnet, dass** im Fahrgastraum (1) angeordnete Sitze (3; 4) klappbar und von der Ladeplatte (18) überfahrbar sind.

4. Kraftfahrzeug nach Anspruch 3, **dadurch gekennzeichnet, dass** an einem der Sitze (23) Schienenelemente (21) angeordnet sind, die in einem umgeklappten Zustand des Sitzes (23) Bestandteil des Schienenweges sind.

5. Kraftfahrzeug nach einem der vorhergehenden Ansprüche, **gekennzeichnet durch** wenigstens eine neben dem Schienenweg angeordnete Vertiefung in einem Boden des Laderaums.

6. Kraftfahrzeug nach Anspruch 5, **gekennzeichnet durch** einen in die Vertiefung eingesetzten Behälter (11; 12).

7. Kraftfahrzeug nach Anspruch 6, **dadurch gekennzeichnet, dass** der Behälter (11; 12) mit nach unten gekehrtem Boden und nach oben gekehrtem Boden in die Vertiefung einsetzbar ist.

8. Kraftfahrzeug nach einem der vorhergehenden Ansprüche, **dadurch gekennzeichnet, dass** der Schienenweg durch ein Schienenpaar mit zwei parallelen und voneinander beabstandeten Schienen (6) gegeben ist.

9. Kraftfahrzeug nach einem der vorhergehenden Ansprüche, **gekennzeichnet durch** eine Vertiefung zwischen den Schienen (6).

10. Kraftfahrzeug nach Anspruch 9, **gekennzeichnet durch** eine Abdeckung (14; 15) der Vertiefung.

11. Kraftfahrzeug nach Anspruch 10, **dadurch gekennzeichnet, dass** die Abdeckung (14; 15) eine Klappdeckel (14) ist.

12. Kraftfahrzeug nach Anspruch 10, **dadurch gekennzeichnet, dass** die Abdeckung (14; 15) ein Rollo (15) ist.

13. Kraftfahrzeug nach einem der vorhergehenden Ansprüche, **gekennzeichnet durch** wenigstens einen entlang des Schienenweges versetzbaren Behälter (8).

14. Kraftfahrzeug nach Anspruch 9 und 13, **dadurch gekennzeichnet, dass** ein Boden des Behälters (8) in der Vertiefung unterhalb der Schienen (6) liegt.

15. Kraftfahrzeug nach Anspruch 13, **dadurch gekennzeichnet, dass** ein Boden des Behälters (8) auf Höhe der Schienen (6) liegt.

## Claims

1. A motor vehicle comprising a load area (2) including a rail track running in the longitudinal direction of the motor vehicle on which a load panel (18) is displaceable, wherein the rail track extends into a passenger compartment (1) of the motor vehicle and the load panel (18) is displaceable on the rail track between the load area (2) and the passenger compartment (1) and is removable from the rail track, **characterized in that** the load panel (18) is adapted to be inserted into the motor vehicle as a hat rack.

2. A motor vehicle in accordance with any of the preceding Claims, **characterized in that** the load panel (18) is fixed in releasable manner to a base member (7) which is displaceable along the rail track.

3. A motor vehicle in accordance with any of the preceding Claims, **characterized in that** seats (3; 4) arranged in the passenger compartment (1) are adapted to be folded and passed over by the load panel (18).

4. A motor vehicle in accordance with Claim 3, **characterized in that** rail elements (21) are arranged on one of the seats (23), said elements being a component part of the rail track when the seat (23) is in a folded state.

5. A motor vehicle in accordance with any of the preceding Claims, **characterized by** at least one recess in a floor of the load area which is arranged beside the rail track.

6. A motor vehicle in accordance with Claim 5, **characterized by** a container (11; 12) inserted into the recess.

7. A motor vehicle in accordance with Claim 6, **characterized in that** the container (11; 12) is adapted to be inserted into the recess with the base thereof turned downwardly and with the base thereof turned upwardly.

8. A motor vehicle in accordance with any of the preceding Claims, **characterized in that** the rail track is provided by a pair of rails comprising two rails (6) which are parallel and spaced from one another.

9. A motor vehicle in accordance with any of the preceding Claims, **characterized by** a recess between the rails (6).

10. A motor vehicle in accordance with Claim 9, **characterized by** a cover (14; 15) for the recess.

11. A motor vehicle in accordance with Claim 10, **characterized in that** the cover (14; 15) is a lift-up lid (14).

12. A motor vehicle in accordance with Claim 10, **characterized in that** the cover (14; 15) is a roller blind (15).

13. A motor vehicle in accordance with any of the preceding Claims, **characterized by** at least one container (8) which is displaceable along the rail track.

14. A motor vehicle in accordance with Claim 9 and 13, **characterized in that** a base of the container (8) lies in the recess underneath the rails (6).

15. A motor vehicle in accordance with Claim 13, **characterized in that** a base of the container (8) is at the height of the rails (6).

## Revendications

1. Véhicule automobile muni d'un espace de chargement (2) avec des rails de guidage s'étendant dans le sens longitudinal du véhicule automobile, et sur lesquels est susceptible de se déplacer un plateau de chargement (18), les rails de guidage s'étendant dans un espace (1) destiné aux voyageurs du véhicule automobile et le plateau de chargement (18) étant susceptible de se déplacer sur les rails, entre l'espace de chargement (2) et l'espace destiné aux voyageurs (1) et étant dissociable des rails, **caractérisé en ce que** le plateau de chargement (18) est utilisable comme plaque de recouvrement dans le véhicule automobile.

2. Véhicule automobile selon l'une des revendications précédentes, **caractérisé en ce que** le plateau de chargement (18) est fixé de manière amovible sur une base (7) déplaçable le long des rails de guidage.

3. Véhicule automobile selon l'une des revendications précédentes, **caractérisé en ce que** des sièges (3 ; 4) agencés dans l'espace (1) destiné aux voyageurs sont repliables et peuvent être recouverts par le plateau de chargement (18).

4. Véhicule automobile selon la revendication 3, **caractérisé en ce que** des éléments de rails (21) sont agencés sur l'un des sièges (23), qui, dans un état rabattu du siège (23) constituent des composants des rails.

5. Véhicule automobile selon l'une des revendications précédentes, **caractérisé par** au moins une cavité située dans un plancher de l'espace de chargement et agencée à côté des rails.

6. Véhicule automobile selon la revendication 5, **caractérisé par** un bac (11 ; 12) logé dans la cavité.

7. Véhicule automobile selon la revendication 6, **caractérisé en ce que** le bac (11 ; 12) est susceptible d'être logé dans la cavité avec le fond tourné vers le bas et le fond tourné vers le haut.

8. Véhicule automobile selon l'une des revendications précédentes, **caractérisé en ce que** les rails de guidage sont constitués d'une paire de rails avec deux rails (6) parallèles et espacés l'un de l'autre.

9. Véhicule automobile selon l'une des revendications précédentes, **caractérisé par** une cavité entre les rails (6).

10. Véhicule automobile selon la revendication 9, **caractérisé par** un revêtement (14, 15) de la cavité.

11. Véhicule automobile selon la revendication 10, **caractérisé en ce que** le revêtement (14 ; 15) est un couvercle à charnière (14).

12. Véhicule automobile selon la revendication 10, **caractérisé en ce que** le revêtement (14 ; 15) est une fermeture roulante (15).

13. Véhicule automobile selon l'une des revendications précédentes, **caractérisé par** au moins un bac (8) déplaçable le long des rails de guidage.

14. Véhicule automobile selon la revendication 9 et 13, **caractérisé en ce qu'**un fond du bac (8) repose dans la cavité en dessous des rails (6).

15. Véhicule automobile selon la revendication 13, **caractérisé en ce que** qu'un fond du bac (8) repose à hauteur des rails (6).
